# EUROPEAN PATENT APPLICATION

(11) **EP 4 292 909 A1**
(43) Date of publication of application: **20.12.2023**
(21) Application number: 23179215.1
(22) Date of filing: 14.06.2023
(51) Int. Cl.: B62D 29/04, B62D 25/10, B62D 27/02

(54) **BODYWORK ELEMENT FOR A MOTOR VEHICLE AND RELATED MANUFACTURING PROCESS.**

(30) Priority: 15.06.2022 IT 202200012632
(71) Applicant: FERRARI S.p.A., 41100 Modena (IT)
(72) Inventor: TOMEI, Stefano, 41100 MODENA (IT)
(74) Representative: Studio Torta S.p.A.

(57) **Abstract**

A bodywork element (7, 8) for a motor vehicle (1) includes a structural portion (15), a covering panel (14) overlapping the structural portion (15) according to an arrangement suited to cover the structural portion (15) and define an outer surface (9) of the motor vehicle (1), and a glue layer (16) interposed between the structural portion (15) and the covering panel (14) so as to glue the covering panel (14) to the structural portion (15), thereby fixing the covering panel (14) to the structural portion (15) in said arrangement, characterized in that the covering panel (14) has an end (17) folded onto itself so as to define a gluing surface (20) facing the structural portion (15) in an opposite manner relative to the outer surface (9), the glue layer (16) being applied on the gluing surface (20).

## Description

### CROSS-REFERENCE TO RELATED APPLICATIONS

This patent application claims priority from Italian patent application no. 102022000012632 filed on June 15, 2022, the entire disclosure of which is incorporated herein by reference.

### TECHNICAL FIELD

The invention concerns a bodywork element for a motor vehicle, and related manufacturing process.

In particular, the invention concerns a hood and the manufacturing process thereof.

### PRIOR ART

As known, any motor vehicle includes a body composed of a frame with supporting function and a plurality of bodywork elements carried by the frame and defining the outer surfaces of the motor vehicle.

Usual bodywork elements are, for example, the doors, bumpers, mudguards, roof, front hood, rear hood, and the like.

In turn, each of the bodywork elements can include a structural portion or framework and a covering panel or outer skin to cover the structural portion.

The covering panel has a mainly aesthetic function as it defines an outer surface of the motor vehicle, where an outer surface is understood as a surface that can be seen by persons looking at the motor vehicle from the outside.

The structural portion, on the other hand, has the function of strengthening the bodywork element which is, for example, subject to aerodynamic forces during use of the motor vehicle.

The bodywork element can be made of various materials, including composite materials comprising carbon fibre.

In particular, both the structural portion and the covering panel can comprise carbon fibre or be made entirely of one of the above-mentioned composite materials.

In these cases, the covering panel is usually fixed to the structural portion at a periphery of the covering panel by means of gluing, more precisely with a structural glue, namely an epoxy glue, for example.

However, the gluing presents a critical aspect in terms of the potential appearance of imperfections on the outer surface of the covering panel due to the crosslinking or polymerization of the glue used for the gluing.

In the light of the above, the appearance of imperfections obviously represents a technical drawback associated with the process for fixing the covering panel to the structural portion of the bodywork element.

An object of the invention is to overcome or at least alleviate the above-mentioned drawback, preferably in a simple reliable manner.

### DISCLOSURE OF THE INVENTION

The object is achieved by a bodywork element and a process for manufacturing the bodywork element as defined in the independent claims.

The dependent claims illustrate particular embodiments of the invention.

### BRIEF DESCRIPTION OF THE DRAWINGS

Below, an embodiment of the invention is described for a better understanding thereof by way of non-limiting example and with reference to the attached drawings in which:
- figure 1 is a perspective view of a motor vehicle comprising a bodywork element according to the invention;

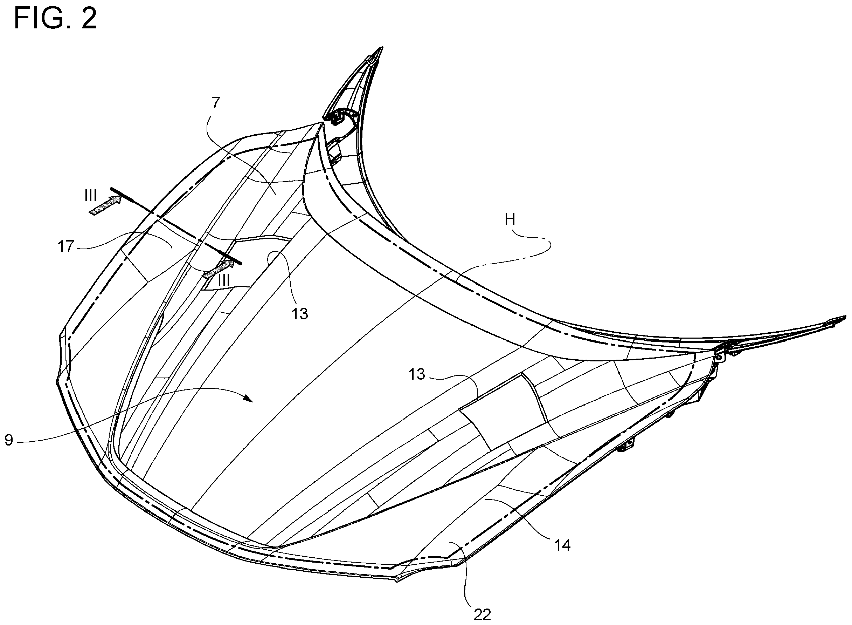

- figure 2 is a perspective view, on an enlarged scale, of the bodywork element;
- figure 3 is a section of the bodywork element according to a section plane identified by the line III-III in figure 2, and
- figure 4 is a section corresponding to that of figure 3 for a bodywork element according to the known art.

### EMBODIMENTS OF THE INVENTION

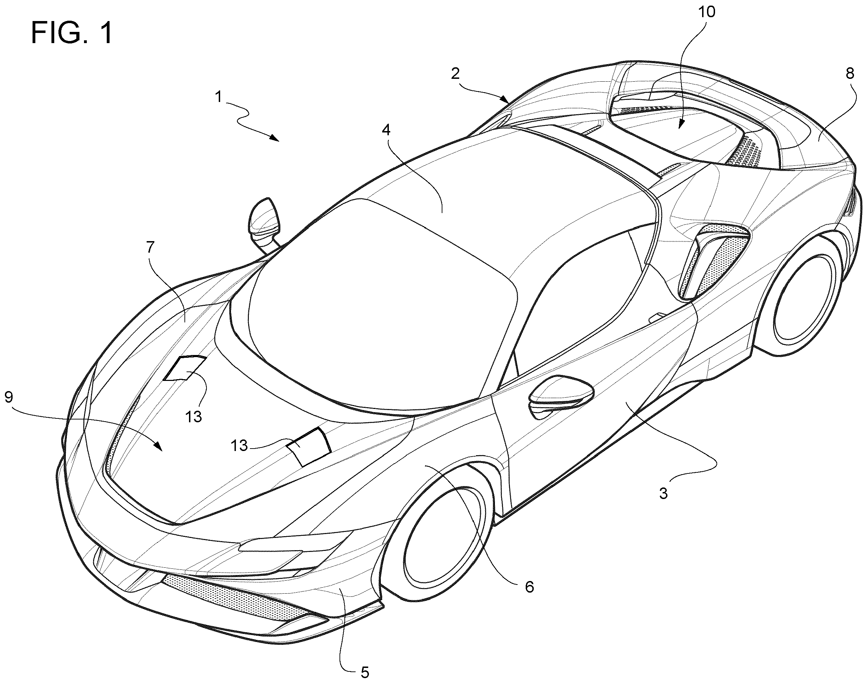

In figure 1, the reference number 1 is used to indicate, overall, a motor vehicle.

Like all motor vehicles, the motor vehicle 1 has a normal direction of forward movement.

Therefore, terms such as front and rear should be understood with reference to the direction of forward movement.

The motor vehicle 1 comprises a body 2, comprising in turn a frame not illustrated and a plurality of bodywork elements carried by the frame and respectively defining outer surfaces of the motor vehicle 1, namely surfaces that can be seen by persons outside the motor vehicle 1.

The bodywork elements include a side door 3, roof 4, bumper 5, mudguard 6, front hood 7 and rear hood 8.

The front hood 7 and the rear hood 8 have respective outer surfaces 9, 10 coinciding with upper surfaces of the motor vehicle 1 visible from above.

Each of the characteristics of the front hood 7 that will be specifically described below can also be applied to the rear hood 8 independently, therefore the latter will not be described in detail but only by analogy with the front hood 7.

Specifically, the front hood 7 optionally has two through openings 13, for example to facilitate a passage of air from the outside of the motor vehicle 1 towards a compartment covered by the front hood 7, namely in particular an engine compartment of the motor vehicle 1.

As already mentioned, the through openings 13 could also be obtained on the rear hood 8, although this is not illustrated in figure 1. Two through openings 13 are not necessarily required; they can also be reduced to one or increased.

Each of the characteristics of the front hood 7 described here can also be applied independently to each of the bodywork elements, without any loss of generality.

The front hood 7 comprises a framework or structural portion 15 with structural function, namely a general strengthening function of the front hood 7.

Furthermore, the front hood 7 comprises a skin or covering panel 14 defining or having the surface 9. The covering panel 14 has a mainly aesthetic function as it includes the surface 9 which can be seen by persons outside the motor vehicle 1.

For example, one or more preferably both the panel 14 and the portion 15 comprise or consist of a composite material, more specifically comprising carbon fibre.

The panel 14, which can be considered a metal sheet, has a thickness inferior to the portion 15.

The aesthetic value of the material of the panel 14 is greater than that of the portion 15.

The material of the panel 14 is less resistant to stress than that of the portion 15.

The panel 14 is fixed to the portion 15 according to an arrangement relative to the portion 15 such as to be overlapping the latter. Therefore, the panel 14 covers the portion 15.

More specifically, the panel 14 covers the portion 15 entirely, so that the portion 15 is covered or concealed by the panel 14. In other words, substantially, the portion 15 cannot be seen or cannot be easily identified by the persons outside the motor vehicle 1, at least provided that the front hood 7 is arranged as in figure 1, namely in a closed position, in which in particular the hood 7 covers or closes the compartment below.

The panel 14 is glued to the portion 15; in other words, the hood 7 comprises at least a layer of glue 16, more precisely a structural glue such as, for example, an epoxy glue, to glue the panel 14 to the portion 15.

The layer of glue 16 is therefore interposed between the portion 15 and the panel 14.

In reality, the panel 14 is glued to the portion 15 in the area of at least one end 17 of the panel 14; namely, the panel 14 has at least the end 17 glued to the portion 15 by means of the layer of glue 16.

The end 17 is folded onto itself or turned back, so that the end 17 has a surface 20 facing the portion 15 in an opposite manner relative to the surface 9. In practice, the surface 9 faces one side of the hood 7, in particular upwards, while the surface 20 faces an opposite side of the hood 7, in particular downwards.

The surfaces 9, 20 are preferably parallel to each other.

The surface 20 defines a gluing surface, since the layer of glue 16 is applied on the surface 20.

Therefore, the surface 20 is directly glued to the portion 15 by means of the layer of glue 16, specifically.

As can be seen in figure 1, the end 17 is part of a contour of one of the openings 13; however, this is not necessarily limiting.

In other words, the end 17 defines at least partly a contour of one of the openings 13, namely in particular at least one side of the contour or the entire contour if the end 17 extends in a ring all around the opening 13.

Here, the folding and gluing are particularly advantageous as the openings 13 are particularly exposed and have to maintain a very high aesthetic value, while performing their technical function of letting air into the engine compartment.

The panel 14 could have alternatively or additionally other ends folded onto themselves and glued to the portion 15 analogously to the end 17 described above. For example, said ends could define the entire contour of one or both the openings 13.

For example, the panel 14 can have a periphery or peripheral band 22, in particular defining a closed ring, which is entirely folded onto itself so as to define a peripheral surface facing the portion 15 in an opposite manner relative to the surface 9.

The peripheral surface has a role analogous to that of the surface 20 described above, hence the characteristics of the surface 20 can each apply independently to the peripheral surface.

Therefore, the peripheral band 22 would comprise the ends glued to the portion 15 analogously to the end 17 as described above.

In particular, the peripheral band 22 extends along a closed profile H.

The layer of glue applied on the peripheral surface to glue the peripheral band 22 to the portion 15 can extend continuously over the peripheral surface throughout the profile H so as to form a ring.

Alternatively, several non-overlapping layers of glue can be applied on the peripheral surface in a distributed manner along the closed profile H. The plurality of layers of glue naturally have the same function as the layer of glue forming a ring throughout the profile H.

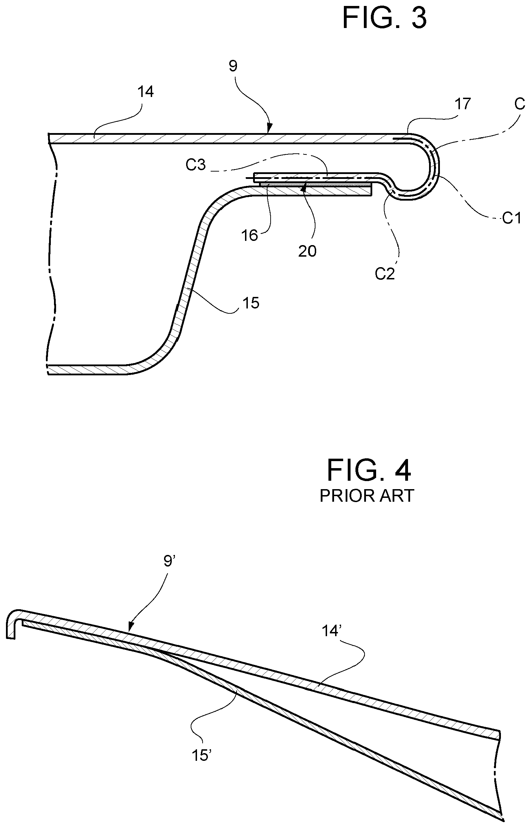

In further detail, figure 3 accurately illustrates the folding of the end 17. The characteristics of the folding are clearly applicable, each one independently, to the folds of the other ends folded onto themselves and glued to the portion 15.

The folding is obtained according to a curved folding profile C.

The folding profile C comprises at least a segment C1 that can be better described by means of polar coordinates. By means of the polar coordinates, each point of the segment C1 can be defined by the dimension of a radius or polar axis that connects the point to a fixed pole.

The radius can also be considered as a radius of curvature. Similarly, the pole can be considered as a centre of curvature.

In polar coordinates, the segment C1 is defined by the radius that sweeps an angle at least greater than a right angle, more preferably equal to or greater than a straight angle.

Furthermore, the profile C comprises a segment C2 connected or adjacent to the segment C1. The segment C2 is connected to the segment C1 in an inflection point, namely a point in which the concavity of the profile C is inverted.

In particular, the segment C2 is an intermediate segment of the profile C, so that the segment C2 is arranged between the segment C1 and a segment C3 of the profile C.

More in particular, the segment C3 corresponds to the surface 20.

Specifically, the segment C3 is rectilinear.

The layer of glue 16 is arranged between the segment C3 and the portion 15.

In figure 3, the portion 15 comprises a concave plate with concavity facing the panel 14.

As can be seen in figure 3, the surfaces 9, 20 have respective tangent planes, specifically parallel to each other and more specifically coinciding with said surfaces 9, 20.

The segment C1 has at least one tangent plane, so that the plane tangent to the surface 9 is between the plane tangent to the segment C1 and the plane tangent to the surface 20.

Also the plane tangent to the segment C1 is in particular parallel to the other two tangent planes.

Here below, a process for manufacturing the hood 7 is described in detail.

Analogous processes can be used to manufacture any one of the bodywork elements described above.

The process comprises folding the end 17 of the panel 14 onto itself so that the end 17 folded onto itself defines the gluing surface 20 that will face the portion 15 in an opposite manner relative to the surface 9.

The panel 14 is obviously a component with a reduced thickness relative to the length and width dimensions; for convenience of description, the panel 14 can be considered a two-dimensional element, namely with negligible thickness. Therefore, the end 17 corresponds to an edge of the panel 14, in particular considered as a two-dimensional element.

Furthermore, the process comprises gluing the surface 20 to the portion 15 by means of the layer 16 applied on the surface 20.

The layer 16 is for example applied on the surface 20 before effective gluing of the surface 20 on the portion 15. Alternatively or additionally, the layer 16 can be applied also on the portion 15, in particular before gluing of the surface 20 to the portion 15.

In this way, the panel 14 is fixed to the portion 15.

More precisely, the panel 14 is fixed to the structural portion in the above-mentioned suitable arrangement.

From the above, the advantages of the bodywork element and the process according to the invention are evident.

The layer of glue 16 is applied on the surface 20, which is a surface not visible to persons outside the motor vehicle 1 since it faces the portion 15.

Therefore, any imperfections due to polymerization of the glue are generated on a non-visible surface, so as not to constitute any disadvantage.

The profile C is shaped so as to conceal even more the surface 20 from the view of persons.

The process for manufacturing the bodywork element is simple and does not require any particularly complex or costly additional steps compared to the known processes.

According to the known technique, as can be seen in figure 4, the glue is applied between the covering panel 14' and the structural portion 15', but any bulges obviously result in imperfections on the outer surface 9' of the bodywork element.

Lastly it is clear that modifications and variations that do not depart from the protective scope defined by the claims can be made to the bodywork element and process according to the invention.

In particular, the number and shape of the components described and illustrated could be different and in particular varied with great freedom.

## Claims

1. A bodywork element (7, 8) for a motor vehicle (1), the element comprising
- a structural portion (15),
- a covering panel (14) overlapping the structural portion (15) according to an arrangement suited to cover the structural portion (15) and define an outer surface (9) of the motor vehicle (1), and
- a glue layer (16) interposed between the structural portion (15) and the covering panel (14) so as to glue the covering panel (14) to the structural portion (15), thereby fixing the covering panel (14) to the structural portion (15) in said arrangement,
**characterized in that** the covering panel (14) has an end (17) folded onto itself so as to define a gluing surface (20) facing the structural portion (15) in an opposite manner relative to the outer surface (9), the glue layer (16) being applied on the gluing surface (20).

2. The bodywork element according to claim 1, wherein the covering panel (14) and/or the structural part (15) comprise carbon fibre.

3. The bodywork element according to any one of the preceding claims, defined by a hood (7, 8) for the motor vehicle (1).

4. The bodywork element according to any one of the preceding claims, wherein the end (17) is part of a peripheral band (22) of the covering panel (14), the peripheral band (22) extending along a closed profile (H) and being entirely folded onto itself so as to define a peripheral surface facing the structural portion (15) in an opposite manner relative to the outer surface (9).

5. The bodywork element according to claim 4, comprising several glue layers (16) not overlapping one another and applied on the peripheral surface in a distributed manner along the closed profile (H), or wherein the glue layer (16) extends with continuity on the peripheral surface along the entire closed profile (H) so as to form a ring.

6. The bodywork element according to any one of the preceding claims, wherein the gluing surface (20) is parallel to the outer surface (9).

7. The bodywork element according to any one of the preceding claims, wherein the end (17) is folded onto itself according to a curved folding profile (C) having a first segment (C1) defined, in polar coordinates, by a polar axis sweeping an angle that is greater than a right angle.

8. The bodywork element according to claim 7, wherein the polar axis sweeps an angle that is equal to or greater than a straight angle.

9. The bodywork element according to claim 7 or 8, wherein the folding profile (C) comprises a second segment (C2) connected to the first segment (C1) in an inflection point.

10. A process to manufacture a bodywork element (7, 8), the bodywork element comprising a structural portion (15) and a covering panel (14) that can overlap the structural portion (15) according to an arrangement suited to cover the structural portion (15) and define an outer surface (9) of a motor vehicle (1), the process comprising
- folding an end (17) of the covering panel (14) onto itself so that the end (17) folded onto itself defines a gluing surface (20) to face the structural portion (14) in an opposite manner relative to the outer surface (9), and
- gluing the gluing surface (20) to the structural portion (15) by means of a glue layer (16) applied on the gluing surface (20), thereby fixing the covering panel (14) to the structural portion (15) in said arrangement.
